(19) Europäisches Patentamt
European Patent Office
Office européen des brevets

(11) **EP 4 734 381 A1**

(12) **EUROPEAN PATENT APPLICATION**
published in accordance with Art. 153(4) EPC

(43) Date of publication:
29.04.2026 Bulletin 2026/18

(21) Application number: 24843554.7

(22) Date of filing: 19.07.2024

(51) International Patent Classification (IPC):
$H04B\ 1/401^{(2015.01)}$        $H04B\ 1/525^{(2015.01)}$
$H04B\ 1/10^{(2006.01)}$         $H04B\ 1/3827^{(2015.01)}$
$H04B\ 17/12^{(2015.01)}$        $H04B\ 17/309^{(2015.01)}$
$H04W\ 84/12^{(2009.01)}$

(52) Cooperative Patent Classification (CPC):
H04B 1/10; H04B 1/3827; H04B 1/401;
H04B 1/525; H04B 17/12; H04B 17/309;
H04W 84/12

(86) International application number:
PCT/KR2024/010474

(87) International publication number:
WO 2025/018841 (23.01.2025 Gazette 2025/04)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 20.07.2023 KR 20230094794
18.09.2023 KR 20230124054

(71) Applicant: **Samsung Electronics Co., Ltd.
Suwon-si, Gyeonggi-do 16677 (KR)**

(72) Inventors:
• **LEE, Muyeol
Suwon-si, Gyeonggi-do 16677 (KR)**
• **BAE, Hanjae
Suwon-si, Gyeonggi-do 16677 (KR)**

• **LEE, Kyoungsun
Suwon-si, Gyeonggi-do 16677 (KR)**
• **KIM, Minji
Suwon-si, Gyeonggi-do 16677 (KR)**
• **PARK, Eunsoo
Suwon-si, Gyeonggi-do 16677 (KR)**
• **LEE, Donghan
Suwon-si, Gyeonggi-do 16677 (KR)**
• **JANG, Jinyoung
Suwon-si, Gyeonggi-do 16677 (KR)**
• **AN, Jinwan
Suwon-si, Gyeonggi-do 16677 (KR)**

(74) Representative: **Gulde & Partner
Patent- und Rechtsanwaltskanzlei mbB
Berliner Freiheit 2
10785 Berlin (DE)**

(54) **ELECTRONIC DEVICE HAVING PLURALITY OF ANTENNAS, AND CONTROL METHOD THEREFOR**

(57) An electronic device according to various embodiments comprises: a first antenna; a filter for filtering out a noise component from an adjacent frequency band of a signal received through the first antenna; a second antenna; a first communication circuit for transmitting and/or receiving a signal in a first frequency band of a first communication network through at least one of a plurality of antennas comprising the first antenna and the second antenna; a second communication circuit for transmitting and/or receiving a signal in a second frequency band of a second communication network through the first antenna or the second antenna, wherein the second frequency band is a frequency band adjacent to the first frequency band, and the filter may reduce a noise component introduced into the first communication circuit according to a transmission operation of the second communication circuit. Various other embodiments are possible.

**(Cont. next page)**

EP 4 734 381 A1

# FIG. 3A

300

310

330

1$^{ST}$ COMMUNICATION CIRCUIT

331

RFFE

311

320

340

2$^{ND}$ COMMUNICATION CIRCUIT

332

RFFE

**Description**

[Technical Field]

Various embodiments disclosed in this document relate to an electronic device including a plurality of antennas and a control method thereof.

[Background Art]

With the growth of wireless communication technology, electronic devices providing wireless communication functionality have become commonplace, and various wireless communication technologies are being widely utilized to offer wireless communication services.

To provide wireless communication services through wireless communication technology, a wireless local area network (hereinafter referred to as "WLAN") may establish a network environment from a hub to each terminal using radio frequencies or light instead of wired cables in indoor or outdoor environments limited to a specific space or building, such as offices, stores, or homes, primarily based on Wi-Fi. WLANs eliminate the need for cabling, facilitate easy device relocation, support mobile communication, and allow for rapid network deployment. Furthermore, WLANs eliminate the need for cabling, facilitate easy device relocation, support mobile communication, and allow for rapid network deployment. Furthermore, despite their low latency, WLANs can handle high data throughput, making them widely used for various services across multiple sectors.

To provide wireless communication services over a broader coverage area, a wireless wide area network (WWAN) aims to establish nation-wide broadband communication networks by integrating various wireless communication technologies based on cellular networks, such as long term evolution (LTE) communication and 5G (or new radio (NR)) communication.

However, frequency resources utilized for these diverse services are finite. Consequently, certain frequency bands allocated for WWAN in an electronic device may be adjacent to or overlap with those used for WLAN.

As modern electronic devices increasingly utilize the same or adjacent antennas for heterogeneous wireless communication schemes to accommodate various components within a limited form factor, the simultaneous operation of communication methods with adjacent or overlapping frequency bands may cause mutual interference. This can lead to degraded communication quality, such as reduced communication range and decreased throughput, or even result in communication failure.

The above information may be presented as background information only to assist with an understanding of the disclosure. No determination has been made, and no assertion is made, as to whether any of the above might be applicable as prior art with regard to the disclosure.

[Disclosure of Invention]

[Solution to Problem]

According to various embodiments, an electronic device includes a first antenna, a filter configured to filter a noise component in an adjacent frequency band of a signal received via the first antenna, a second antenna, a first communication circuit configured to transmit and/or receive a signal in a first frequency band of a first communication network via at least one of a plurality of antennas including the first antenna and the second antenna, and a second communication circuit configured to transmit and/or receive a signal in a second frequency band of a second communication network via the first antenna or the second antenna. The second frequency band is adjacent to the first frequency band, and the filter may be configured to reduce a noise component introduced into the first communication circuit based on a transmission operation of the second communication circuit.

According to various embodiments, a method of an electronic device including a first antenna, a filter configured to filter a noise component in an adjacent frequency band of a signal received via the first antenna, a second antenna, a first communication circuit configured to transmit and/or receive a signal in a first frequency band of a first communication network via at least one of a plurality of antennas including the first antenna and the second antenna, and a second communication circuit configured to transmit and/or receive a signal in a second frequency band of a second communication network via the first antenna or the second antenna, may include determining whether the second communication circuit is operating while the first communication circuit transmits and/or receives a signal via at least one of the first antenna or the second antenna, and in response to determining that the second communication circuit is operating, changing and applying gains of the first antenna and the second antenna.

The technical problems, technical features, and effects in the disclosure are not limited to those mentioned above, and other technical problems, technical features, and effects not mentioned can be clearly understood from the following description by a person skilled in the technical field to which the disclosure belongs.

[Brief Description of Drawings]

In relation to the description of the drawings, the same or similar reference numerals may be used for the same or similar components.

FIG. 1 is a block diagram of an electronic device in a network environment, according to various embodiments.
FIG. 2 is a block diagram of an electronic device for supporting a wireless network communication, according to various embodiments.
FIG. 3A is a block diagram of an electronic device including a plurality of antennas according to an embodiment.
FIG. 3B is a block diagram of an electronic device including a plurality of antennas according to an embodiment.
FIG. 4 is a diagram illustrating an electronic device including a plurality of antennas according to an embodiment.
FIG. 5 is a flowchart illustrating an example of the operation of an electronic device according to an embodiment.
FIG. 6 is a flowchart illustrating an example of the operation of an electronic device according to an embodiment.
FIG. 7 is a flowchart illustrating an example of the operation of an electronic device according to an embodiment.
FIG. 8 is a flowchart illustrating an example of the operation of an electronic device according to an embodiment.
FIG. 9 is a flowchart illustrating an example of the operation of an electronic device according to an embodiment.

[Mode for the Invention]

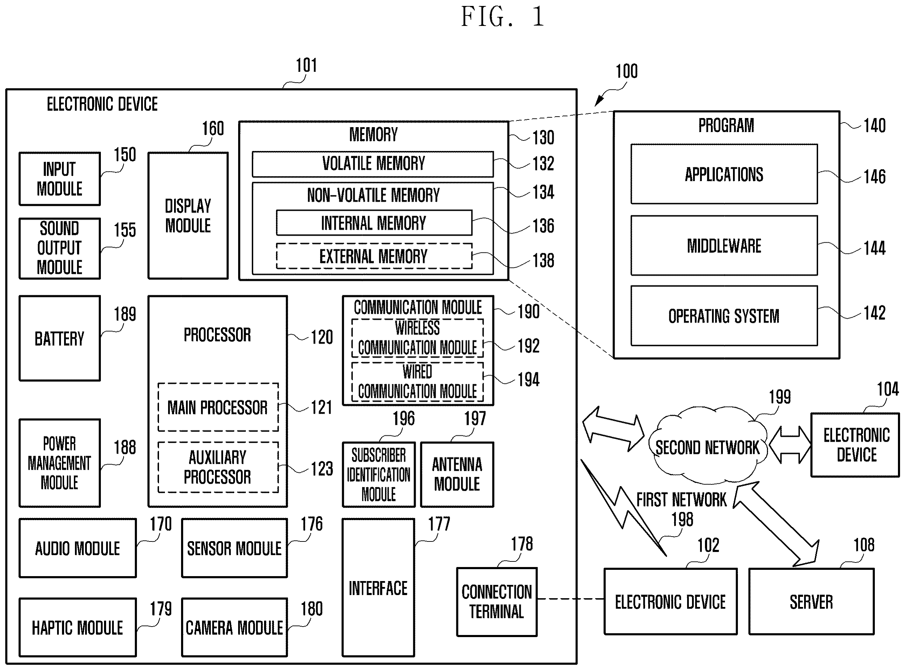

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as BluetoothTM, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

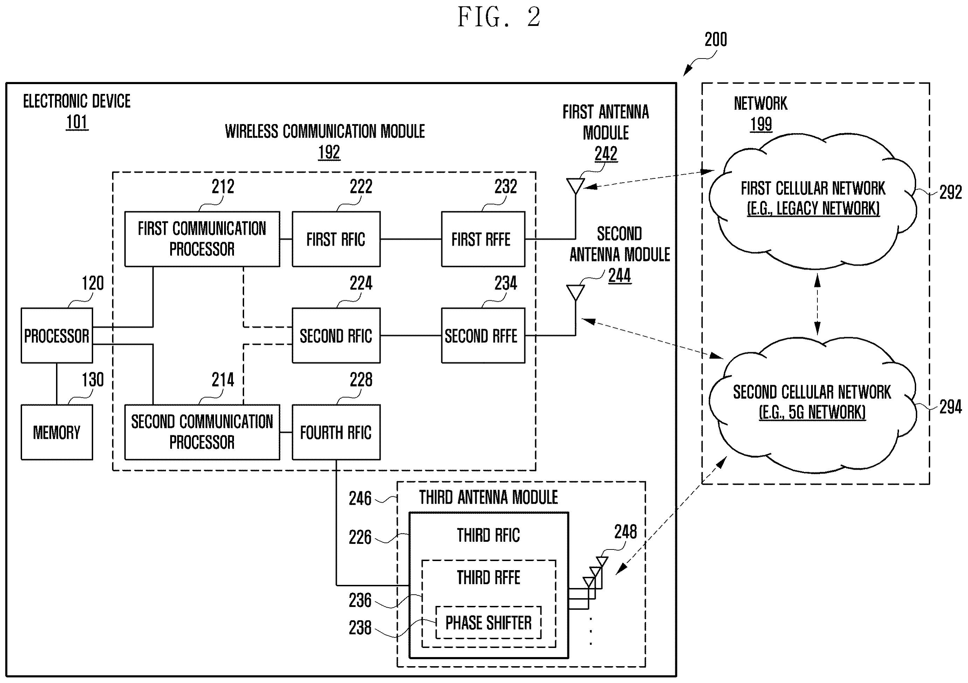

FIG. 2 is a block diagram 200 of an electronic device 101 for supporting legacy network communication and 5G network communication according to an embodiment of the disclosure.

Referring to FIG. 2, the electronic device 101 may include a first communication processor 212, a second communication processor 214, a first radio frequency integrated circuit (RFIC) 222, a second RFIC 224, a third RFIC 226, a fourth RFIC 228, a first radio frequency front end (RFFE) 232, a second RFFE 234, a first antenna module 242, a second antenna module 244, and an antenna 248. The electronic device 101 may further include the processor 120 and the memory 130. The network 199 may include a first network 292 and a second network 294. According to another embodiment of the disclosure, the electronic device 101 may further include at least one component among the components illustrated in FIG. 1, and the network 199 may further include at least one other network. According to an embodiment of the disclosure, the first communication processor 212, the second communication processor 214, the first RFIC 222, the second RFIC 224, the fourth RFIC 228, the first RFFE 232, and the second RFFE 234 may be included as at least a part of the wireless communication module 192. According to another embodiment of the disclosure, the fourth RFIC 228 may be omitted or may be included as a part of the third RFIC 226.

The first communication processor 212 may establish a communication channel of a band to be used for wireless communication with the first network 292, and may support legacy network communication via the established communication channel. According to certain embodiments of the disclosure, the first network may be a legacy network including 2G, 3G, 4G, or long term evolution (LTE) network. The second communication processor 214 may establish a communication channel corresponding to a designated band (e.g., approximately 6GHz to 60 GHz) among bands to be used for wireless communication with the second network 294, and may support 5G network communication via the established channel. According to certain embodiments of the disclosure, the second network 294 may be a 5G network defined in 3GPP. Additionally, according to an embodiment of the disclosure, the first communication processor 212 or the second communication processor 214 may establish a communication channel corresponding to another designated band (e.g., lower than 6GHz) among bands to be used for wireless communication with the second network 294, and may support 5G network communication via the established channel. According to an embodiment of the disclosure, the first communication processor 212 and the second communication processor 214 may be implemented in a single chip or a single package. According to certain embodiments of the disclosure, the first communication processor 212 or the second communication processor 214 may be implemented in a single chip or a single package, together with the processor 120, the auxiliary processor 123, or the communication module 190.

In the case of transmission, the first RFIC 222 may convert a baseband signal generated by the first communication processor 212 into a radio frequency (RF) signal in a range of approximately 700MHz to 3GHz used for the first network 292 (e.g., a legacy network). In the case of reception, an RF signal is obtained from the first network 292 (e.g., a legacy network) via an antenna (e.g., the first antenna module 242), and may be preprocessed via an RFFE (e.g., the first RFFE 232). The first RFIC 222 may convert the preprocessed RF signal to a baseband signal so that the base band signal is processed by the first communication processor 212.

In the case of transmission, the second RFIC 224 may convert a baseband signal generated by the first communication processor 212 or the second communication processor 214 into an RF signal (hereinafter, a 5G Sub6 RF signal) of a Sub6 band (e.g., lower than 6GHz) used for the second network 294 (e.g., 5G network). In the case of reception, a 5G Sub6 RF signal is obtained from the second network 294 (e.g., a 5G network) via an antenna (e.g., the second antenna module 244), and may be preprocessed by an RFFE (e.g., the second RFFE 234). The second RFIC 224 may convert the preprocessed 5G Sub6 RF signal into a baseband signal so that the baseband signal is processed by a corresponding communication processor from among the first communication processor 212 or the second communication processor 214.

The third RFIC 226 may convert a baseband signal generated by the second communication processor 214 into an RF signal (hereinafter, a 5G Above6 RF signal) of a 5G Above6 band (e.g., approximately 6GHz to 60GHz) to be used for the second network 294 (e.g., 5G network). In the case of reception, a 5G Above6 RF signal is obtained from the second network 294 (e.g., a 5G network) via an antenna (e.g., the antenna 248), and may be preprocessed by the third RFFE 236. The third RFIC 226 may convert the preprocessed 5G Above6 RF signal to a baseband signal so that the base band signal is processed by the second communication processor 214. According to an embodiment of the disclosure, the third RFFE 236 may be implemented as a part of the third RFIC 226.

According to an embodiment of the disclosure, the electronic device 101 may include the fourth RFIC 228, separately from or as a part of the third RFIC 226. In this instance, the fourth RFIC 228 may convert a baseband signal generated by the second communication processor 214 into an RF signal (hereinafter, an IF signal) in an intermediate frequency band (e.g., approximately 9GHz to 11GHz), and may transfer the IF signal to the third RFIC 226. The third RFIC 226 may convert the IF signal to a 5G Above6 RF signal. In the case of reception, a 5G Above6 RF signal is received from the second network 294 (e.g., a 5G network) via an antenna (e.g., the antenna 248), and may be converted into an IF signal by the third RFIC 226. The fourth RFIC 228 may convert the IF signal to a baseband signal so that the base band signal is processed by the second communication processor 214.

According to an embodiment of the disclosure, the first RFIC 222 and the second RFIC 224 may be implemented as a single chip or at least a part of the single package. According to an embodiment of the disclosure, the first RFFE 232 and the second RFFE 234 may be implemented as a single chip or at least a part of the single package. According to an embodiment of the disclosure, at least one antenna module of the first antenna module 242 or the second antenna module 244 may be omitted, or may be combined with another antenna module so as to process RF signals in a plurality of bands.

According to an embodiment of the disclosure, the third RFIC 226 and the antenna 248 may be disposed in the same substrate, and may form the third antenna module 246. For example, the wireless communication module 192 or the processor 120 may be disposed in a first substrate (e.g., main PCB). In this instance, the third RFIC 226 is disposed in a part (e.g., a lower part) of the second substrate (e.g., a sub PCB) separate from the first substrate and the antenna 248 is disposed on another part (e.g., an upper part), so that the third antenna module 246 is formed. By disposing the third RFIC 226 and the antenna 248 in the same substrate, the length of a transmission line therebetween may be reduced. For example, this may reduce a loss (e.g., attenuation) of a signal in a high-frequency band (e.g., approximate 6GHz to 60GHz) used for 5G network communication, the loss being caused by a transmission line. Accordingly, the electronic device 101 may improve the quality or speed of communication with the second network 294 (e.g., 5G network).

According to an embodiment of the disclosure, the antenna 248 may be implemented as an antenna array including a plurality of antenna elements which may be used for beamforming. In this instance, the third RFIC 226 may be, for example, a part of the third RFFE 236, and may include a plurality of phase shifters 238 corresponding to a plurality of antenna elements. In the case of transmission, each of the plurality of phase shifters 238 may shift the phase of a 5G Above6RF signal to be transmitted to the outside of the electronic device 101 (e.g., a base station of a 5G network) via a corresponding antenna element. In the case of reception, each of the plurality of phase shifters 238 may shift the phase of the 5G Above6 RF signal received from the outside via a corresponding antenna element into the same or substantially the same phase. This may enable transmission or reception via beamforming between the electronic device 101 and the outside.

The second network 294 (e.g., 5G network) may operate independently (e.g., Stand-Along (SA)) from the first network 292 (e.g., a legacy network), or may operate by being connected thereto (e.g., Non-Stand Alone (NSA)). For example, in the 5G network, only an access network (e.g., 5G radio access network (RAN) or next generation RAN (NG RAN)) may exist, and a core network (e.g., next generation core (NGC)) may not exist. In this instance, the electronic device 101 may access an access network of the 5G network, and may access an external network (e.g., the Internet) under the control of the core network (e.g., an evolved packed core (EPC)) of the legacy network. Protocol information (e.g., LTE protocol information) for communication with the legacy network or protocol information (e.g., New Radio (NR) protocol information) for communication with the 5G network may be stored in the memory 130, and may be accessed by another component (e.g., the processor 120, the first communication processor 212, or the second communication processor 214).

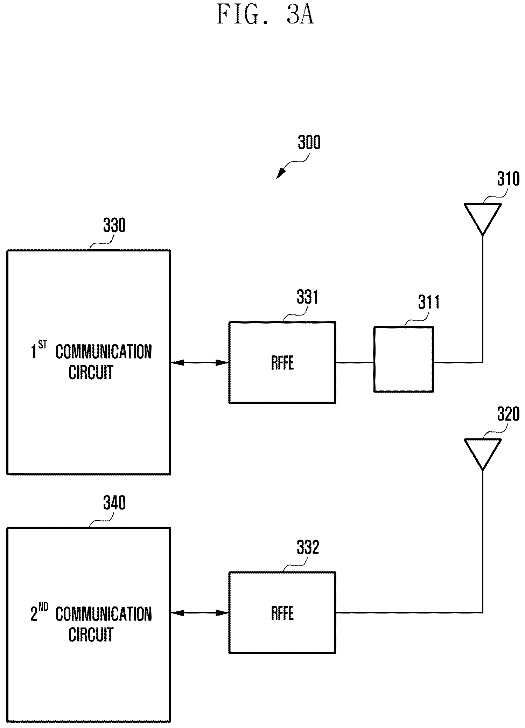

FIG. 3A is a block diagram 300 of an electronic device (e.g., the electronic device 101 in FIG. 1 or FIG. 2) including a plurality of antennas according to an embodiment.

With reference to FIG. 3A, the electronic device 101 (e.g., the electronic device 101 in FIG. 1) according to an embodiment may include a first communication circuit 330 for transmitting and/or receiving signals in a first frequency band of a first communication network (e.g., a WLAN network such as a WiFi network) and a second communication circuit 340 for transmitting and/or receiving signals in a second frequency band of a second communication network (e.g., a WWAN network such as an LTE or 5G (NR, new radio) network).

According to an embodiment, the electronic device 101 may transmit and/or receive signals in the first frequency band used in the WiFi network through the first communication circuit 330. To this end, the first communication circuit 330 may be connected to one or more radio frequency front ends (RFFEs) 331. Upon transmission, the one or more RFFEs 331 and/or 332 may convert a signal generated by the first communication circuit 330 into a radio frequency (RF) signal of the first frequency band (e.g., a frequency band of about 2.4 GHz to 2.5 GHz and/or a frequency band of about 5.15 GHz to 7.15 GHz) used in the first communication network, and then transmit it via a first antenna 310 and/or a second antenna 320. Upon reception, the one or more RFFEs 331 may convert an RF signal received via the first antenna 310 to be processed by the first communication circuit 330 and then route it to the first communication circuit 330. Although the one or more RFEEs 331 are described herein as operating separately from the first communication circuit 330, this is exemplary only, and the functionality of the one or more RFEEs 331 may be integrated into the first communication circuit 330.

According to an embodiment, the second communication circuit 340 may include the first communication processor 212 and/or the second communication processor 214 shown in FIG. 2. An RF signal of the second frequency band (e.g., a sub-6 GHz band and/or an above-6 GHz band) used in the second communication network based on the operation of the second communication circuit 340 may be transmitted or received via the second antenna 320. The second frequency band used in the second communication network based on the operation of the second communication circuit 340 may be an adjacent frequency band of the first frequency band used in the first communication network based on the operation of the first communication circuit 330. According to an embodiment, the electronic device 101 may transmit and/or receive a signal of the first frequency band used in the WiFi network through the first communication circuit 330. To this end, the first communication circuit 330 may be connected to one or more RFFEs 331. For example, the second communication circuit 340 may be connected to one or more RFFEs 332. Upon transmission, the one or more RFFEs 332 may convert a signal generated by the second communication circuit 340 into an RF signal of the second frequency band (e.g., a frequency band of about 2.4 GHz to 2.5 GHz and/or a frequency band of about 5.15 GHz to 7.15 GHz) used in the second communication network, and then transmit it via the second antenna 320. Upon reception, the one or more RFFEs 332 may convert an RF signal received via the second antenna 320 to be processed by the second communication circuit 340 and then route it to the second communication circuit 340. Although the one or more RFEEs 332 are described herein as operating separately from the second communication circuit 340, this is exemplary only, and the functionality of the one or more RFEEs 332 may be integrated into the second communication circuit 340.

According to an embodiment, a signal received from the second antenna 320 may be routed to the second communication circuit 340. According to an embodiment, a signal transmitted from the second communication circuit 340 may be transmitted via the second antenna 320.

According to an embodiment, the first antenna 310 may transmit and/or receive an RF signal in the first frequency band, and the second antenna 320 may transmit and/or receive an RF signal in the second frequency band. The electronic device 301 may perform communication in the second frequency band used in the second communication network through the second communication circuit 340 while performing communication in the first frequency band used in the first communication network through the first communication circuit 330.

According to an embodiment, when the electronic device 101 is implemented as a portable electronic device such as a smartphone or a foldable smartphone, the first communication circuit 330 of the WLAN and the second communication circuit 340 of the WWAN, which use adjacent RF frequency bands, may use adjacent antennas (e.g., the first antenna 310 and the second antenna 320), respectively, to improve antenna usage efficiency. In the case where the first and second communication circuits 330 and 340 use adjacent antennas, a transmission signal routed from the second communication circuit 340 of the WWAN to the second antenna 320 may be partially introduced into the reception path of the first communication circuit 330 of the WLAN via the first antenna 310, which may cause a performance degradation in the first communication circuit 330 of the WLAN. For example, if a transmission signal in a WWAN frequency band such as N48, N77, N78, or N79 is radiated via an antenna located near the WLAN, WLAN performance degradation may occur.

According to an embodiment, to filter adjacent (and/or overlapping) frequency band signal components as described above, a filter 311 may be applied to the reception path of the first frequency band signal to the first communication circuit 330 via the first antenna 310. Applying the filter 311 can prevent performance degradation caused by transmission signals in adjacent frequency bands.

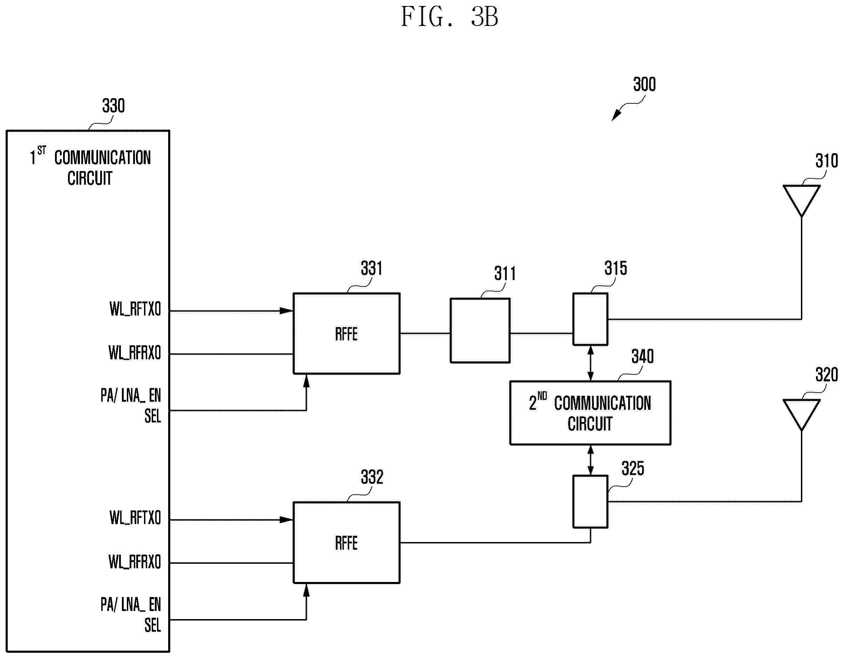

FIG. 3B is a block diagram 300 of an electronic device (e.g., the electronic device 101 in FIG. 1 or FIG. 2) including a plurality of antennas according to an embodiment.

With reference to FIG. 3B, the electronic device 101 (e.g., the electronic device 101 in FIG. 1) according to an embodiment may include a first communication circuit 330 for transmitting and/or receiving signals in a first frequency band of a first communication network (e.g., a WLAN network such as a WiFi network) and a second communication circuit 340 for transmitting and/or receiving signals in a second frequency band of a second communication network (e.g., a WWAN network such as an LTE or 5G (NR, new radio) network).

According to an embodiment, the electronic device 101 may transmit and/or receive signals in the first frequency band used in the WiFi network through the first communication circuit 330. To this end, the first communication circuit 330 may be connected to one or more radio frequency front ends (RFFEs) 331 and/or 332. Upon transmission, the one or more RFFEs 331 and/or 332 may convert a signal generated by the first communication circuit 330 into a radio frequency (RF) signal of the first frequency band (e.g., a frequency band of about 2.4 GHz to 2.5 GHz and/or a frequency band of about 5.15 GHz to 7.15 GHz) used in the first communication network, and then transmit it via a first antenna 310 and/or a second antenna 320. Upon reception, the one or more RFFEs 331 and/or 332 may convert an RF signal received via the first antenna 310 and/or the second antenna 320 to be processed by the first communication circuit 330 and then route it to the first communication circuit 330. Although the one or more RFEEs 331 and/or 332 are described herein as operating separately from the first communication circuit 330, this is exemplary only, and the functionality of the one or more RFEEs 331 and/or 332 may be integrated into the first communication circuit 330.

According to an embodiment, the second communication circuit 340 may include the first communication processor 212 and/or the second communication processor 214 shown in FIG. 2. An RF signal of the second frequency band (e.g., a sub-6 GHz band and/or an above-6 GHz band) used in the second communication network based on the operation of the second communication circuit 340 may be transmitted or received via the first antenna 310 or the second antenna 320. The second frequency band used in the second communication network based on the operation of the second communication circuit 340 may be an adjacent frequency band to the first frequency band used in the first communication network based on the operation of the first communication circuit 330.

According to an embodiment, a signal received from the first antenna 310 and/or the second antenna 320 may be routed to the first communication circuit 330 or the second communication circuit 340 via a diplexer 315 and/or 325.

According to an embodiment, a signal transmitted from the first communication circuit 330 and/or the second communication circuit 340 may be routed to the first antenna 310 and/or the second antenna 320 via the diplexer 315 and/or 325.

According to an embodiment, the first antenna 310 and the second antenna 320 may transmit and/or receive RF signals of the first frequency band and the second frequency band. The electronic device 301 may perform communication in the second frequency band used in the second communication network through the second communication circuit 340 while performing communication in the first frequency band used in the first communication network through the first communication circuit 330. Although the first communication circuit 330 and the second communication circuit 340 have been described as sharing the same antenna (e.g., the first antenna 310 and/or the second antenna 320), the second communication circuit 340 may be implemented to use any other adjacent antenna in addition to the first antenna 310 and/or the second antenna 320.

According to an embodiment, when the electronic device 101 is implemented as a portable electronic device such as a smartphone or a foldable smartphone, the first communication circuit 330 of the WLAN and the second communication circuit 340 of the WWAN, which use adjacent RF frequency bands, may use the same antenna or adjacent antennas (e.g., the first antenna 310 and/or the second antenna 320), thereby improving antenna usage efficiency. In the case where the first and second communication circuits 330 and 340 use the same antenna or adjacent antennas, a transmission signal routed from the second communication circuit 340 of the WWAN to the diplexer 315 and/or 325 may be partially introduced into the reception path of the first communication circuit 330 of the WLAN, thereby causing a performance degradation in the first communication circuit 330 of the WLAN. For example, if a transmission signal in a WWAN frequency band such as N48, N77, N78, or N79 is radiated via the same antenna as the WLAN or an antenna located near, WLAN performance degradation may occur.

According to an embodiment, to filter adjacent (and/or overlapping) frequency band signal components as described above, a filter 311 may be applied to the reception path of the first frequency band signal to the first communication circuit 330 via the first antenna 310. Applying the filter 311 can prevent performance degradation caused by transmission signals in adjacent frequency bands. By actively utilizing the first antenna 310 to which the filter 311 is applied under conditions of simultaneous WWAN operation by the second communication circuit 340, the first communication circuit 330 may reduce WLAN communication performance degradation due to adjacent frequency band signals. Compared to the second antenna 320, the first antenna 310 with the filter 311 applied may have relatively poor antenna reception performance, or may be relatively vulnerable to adjacent frequency band noise interference due to the influence of the adjacent frequency band of the WWAN which becomes a noise source.

According to an embodiment, the above-described filter 311 may not be applied to the reception path to the first communication circuit 330 via the second antenna 320. As a structure to prevent WLAN performance degradation due to adjacent frequency bands, the filter 311 for filtering adjacent frequency band signals may not be applied to at least one antenna (e.g., the second antenna 320).

According to an embodiment, the first antenna 310 may experience approximately 3 dB of signal strength attenuation (insertion loss) due to the filter 311 filtering adjacent WWAN frequency bands from the reception signal. For example, the first antenna 310 may experience approximately 3 dB of deterioration in reception sensitivity (i.e., total isotropic sensitivity (TIS) and/or transmission power (i.e., total radiated power (TRP)) performance due to the filter 311.

According to Table 1 below, when a filter is applied to both the first antenna 310 and the second antenna 320 compared to the case where no filter is applied, the performance is reduced by an average of about 3 dB in a simultaneous operation situation. However, when the filter is applied only to the first antenna 310 and MIMO operation is performed, it can be seen that the performance reduction is significantly reduced even in a simultaneous operation situation.

[Table 1]

| Filter application | TRP/TIS | 44CH | 100CH | 161CH | 3CH avg. |
|---|---|---|---|---|---|
| No filter applied | TRP | 15 | 13.4 | 13.4 | 13.9 |
| | TIS | -71 | -73.1 | -71.1 | -71.7 |
| Filter applied to both 1st and 2nd antennas | TRP | 11.8 | 11.9 | 10.2 | 11.3 |
| | TIS | -68.5 | -69.5 | -68.4 | -68.3 |
| Filter applied to only 1st antenna | TRP | 14.7 | 14.2 | 11.8 | 13.6 |
| | TIS | -71.7 | -72 | -69.4 | -71 |

According to an embodiment, in the absence of simultaneous WWAN operation by the second communication circuit 340, the first communication circuit 330 may reduce signal attenuation by utilizing the second antenna 320 with no filter applied. Since no filter is applied to the second antenna 320, degradation in TIS and/or TRP performance may be prevented. Consequently, antenna performance degradation may be reduced when performing MIMO operations using both the first and second antennas 310 and 320. Table 2 below shows the direct degradation in reception performance caused by transmission signals from adjacent frequency bands at the second antenna 320 with no filter applied. Specifically, during simultaneous operation with the second communication circuit 340, the first communication circuit 330 may experience significant reception performance degradation due to signal components leaking through the signal line from adjacent-band transmission signals at the second antenna 320 with no filter applied.

[Table 2]

| Antenna | 11a Sensitivity | | Spec. |
|---|---|---|---|
| | 44CH | 100CH | |
| 1st antenna (filter applied) | -76.25 | -76.00 | DEF |
| | -75.75 | -76.00 | N77 |
| 2nd antenna (no filter applied) | -76.25 | -76.50 | DEF |
| | -30.50 | -30.00 | N77 |

According to an embodiment, while transmitting or receiving a signal via the first antenna 310 and/or the second antenna 320, the first communication circuit 330 may determine whether the second communication circuit 340 is operating. According to an embodiment, the first communication circuit 330 may determine whether the second communication circuit 340 is operating, based on the quality of signals received via the first antenna 310 and/or the second antenna 320.

According to an embodiment, when the difference between the received signal strengths of the first and second antennas 310 and 320 is equal to or exceeds a specified value, the first communication circuit 330 may determine that the second communication circuit 340 is operating. For example, if the RSSI of the first antenna 310 is -83 dBm and that of the second antenna 320 is -128 dBm, representing a difference of 15 dBm or more, the first communication circuit 330 may conclude that the second communication circuit 340 operates and transmits a signal.

According to an embodiment, the first communication circuit 330 may transmit a signal via the second antenna 320 and receives a signal via the first antenna 310. If the gain loss of the received signal exceeds a specified value (e.g., a value corresponding to a pre-calculated isolation between antennas), the first communication circuit 330 may determine that the second communication circuit 340 is not operating (e.g., by regarding this as a situation such as antenna grip). For example, if the pre-calculated isolation value is 15 dBm, and the RSSI value of the signal received via the first antenna 310 shows a gain loss of 15 dBm relative to the RSSI of the signal transmitted from the first communication circuit 330 via the second antenna 320, it may determine that the second communication circuit 340 is operating. Conversely, if the gain loss is 20 dBm (exceeding 15 dBm), it may be regarded as a situation such as antenna grip.

According to an embodiment, the first communication circuit 330 may determine that the second communication circuit 340 is operating when the received signal strengths (e.g., RSSI) of the first and second antennas 310 and 320 differ by a specified value or more, and the signal-to-noise ratio (SNR) of the antenna with a higher received signal strength decreases between the first and second antennas 310 and 320.

According to an embodiment, the first communication circuit 330 may determine that the second communication circuit 340 is operating when the qualities (e.g., RSSI or SNR) of the received signals of the first and second antennas 310 and 320 differ by a specified value or more for a specified period of time or longer. For example, if the difference in the RSSI values of the first and second antennas 310 and 320 exceeds a specified period of time, the transmission of the second communication circuit 340 may be determined to be operating.

According to an embodiment, the electronic device 101 may include a signal line connected between the first communication circuit 330 and the second communication circuit 340. In this case, the first communication circuit 330 may check the operation of the second communication circuit 340 through the signal line connected to the second communication circuit 340.

According to an embodiment, if it is determined that the second communication circuit 340 is operating, the first communication circuit 330 may change and apply the gains of the first and second antennas 310 and 320. For example, if the gains of the first and second antennas 310 and 320 are each set to 16 dBm, the first communication circuit 330 may change the gain of the first antenna 310 to 20 dBm and the gain of the second antenna 320 to 12 dBm.

According to an embodiment, if it is determined that the second communication circuit 340 is operating, the first communication circuit 330 may change the gains of the first and second antennas 310 and 320. Specifically, it may adjust the power of the second antenna 320, which causes reception performance degradation due to transmission signals of an adjacent WWAN frequency band, to vary within the SAR standard, thereby reducing the degradation of WLAN reception performance due to transmission signals of an adjacent WWAN frequency band. In addition, the WLAN operating conditions may be changed to conditions more favorable for signal transmission and reception via MIMO or ASD. This allows antenna gain configurations to be maintained for optimal WLAN performance when the second communication circuit 340 is not operating.

According to an embodiment, if simultaneous operation of the first and second communication circuits 330 and 340 is confirmed, the first communication circuit 330 may increase the gain value of the first antenna 310, to which the filter 311 is applied, so as to reduce the deterioration of WLAN communication performance and perform smooth WLAN communication.

According to an embodiment, if it is determined that the second communication circuit 340 is operating, the first communication circuit 330 may increase the gain of the first antenna 310 to a specified value and lower the gain of the second antenna 320. The output power of WLAN communication antennas is limited by various standards such as the specific absorption rate (SAR) standard. Under general conditions, the electronic device 101 may adjust the power of the first and second antennas 310 and 320 based on a pre-specified gain table. Under conditions where the transmission operation of the second communication circuit 340 of the adjacent frequency band WWAN communication operates simultaneously with the first communication circuit 330 of the WLAN communication, the gain table may be changed to increase the gain of the first antenna 310 to which the filter is applied, and proportionally lower the gain of the second antenna 320 to which the filter is not applied.

According to an embodiment, if it is determined that the second communication circuit 340 is operating, the first communication circuit 330 may identify the current SAR and, based on this, adjust the gains of the first and second antennas 310 and 320 so as not to exceed the SAR limit.

According to an embodiment, the antenna gain table may be changed to a predetermined value or dynamically varied within a range that satisfies the SAR standard. For example, the gains of the first and second antennas 310 and 320 may be adjusted in accordance with Equation 1 below based on the measured SAR value.

[Equation 1]

$$SAR = \frac{\sigma \times |E|^2}{\rho} = \frac{(1/R \times 1/m) \times V^2/m^2}{kg/m^3} = \frac{V^2}{R} /kg$$

Here, $\sigma$ represents conductivity, E represents electric field strength, and $\rho$ represents mass density.

For example, if the gains of the first and second antennas 310 and 320 are each set to 16 dBm, the first communication circuit 330 may dynamically change the gain table by changing the gains of the first and second antennas 310 and 320 to 20 dBm and 12 dBm in MCS_0 to MCS_4 levels, changing the gains of the first and second antennas 310 and 320 to 19 dBm and 11 dBm in MCS_5 to MCS_7 levels, changing the gains of the first and second antennas 310 and 320 to 18 dBm and 10 dBm in MCS_8 and MCS_9 levels, and changing the gains of the first and second antennas 310 and 320 to 17 dBm and 9 dBm in MCS_10 and MCS_11 levels.

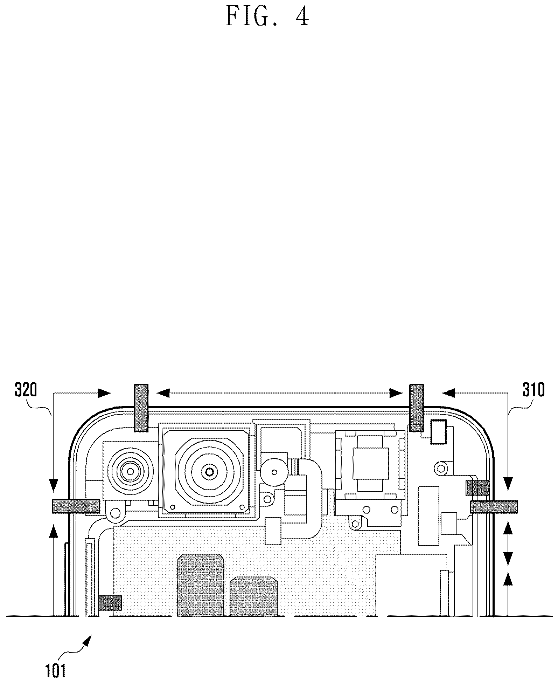

FIG. 4 is a diagram illustrating an electronic device (e.g., the electronic device 101 in FIG. 1, FIG. 2, or FIG. 3) including a plurality of antennas according to an embodiment.

According to an embodiment, the electronic device 101 may include a first antenna (e.g., the first antenna 310 in FIG. 3) and a second antenna (e.g., the second antenna 320 in FIG. 3). A filter (e.g., the filter 311 in FIG. 3) may be applied to the first antenna 310 to filter out adjacent frequency band signals of the WWAN.

In FIG. 4, the first antenna 310 and the second antenna 320 may exhibit a specified gain loss (e.g., 15 dBm) corresponding to the pre-calculated isolation between the antennas.

According to an embodiment, the electronic device 101 may transmit a WiFi signal via the second antenna 320 to which no filter is applied, and receive an RF signal via the first antenna 310 to which a filter is applied. Accordingly, if a specified gain loss occurs in the first antenna 310 compared to the second antenna 320 and the input level of the received signal at the first antenna 310 is lower than or equal to a specified value (e.g., 0 dBm), it may be determined that a second communication circuit (e.g., the second communication circuit 340 in FIG. 3) operates simultaneously with a first communication circuit (e.g., the first communication circuit 330 in FIG. 3).

According to an embodiment, if a gain loss (e.g., 20 dBm) exceeding the specified gain loss occurs in the first antenna 310 relative to the second antenna 320, and the received signal input level of the first antenna 310 is lower than or equal to a predefined value (e.g., -5 dBm), it may be determined that a situation such as antenna grip occurs, causing additional gain loss, thereby relatively increasing the difference in reception input levels.

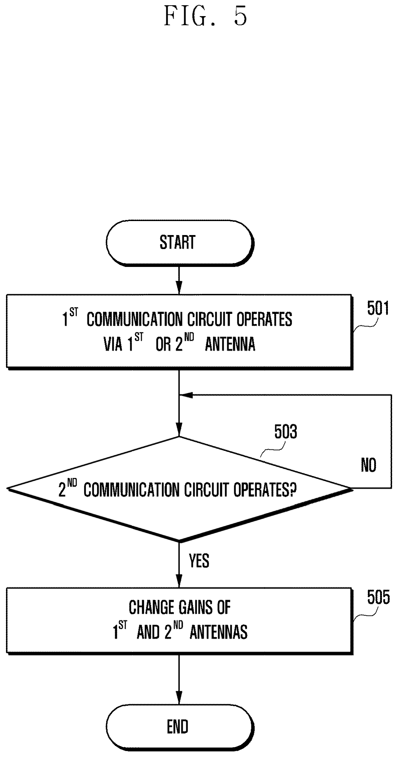

FIG. 5 is a flowchart illustrating an example of the operation of an electronic device (e.g., the electronic device 101 in FIG. 1, FIG. 2, or FIG. 3) according to an embodiment.

According to an embodiment, in operation 501, the electronic device 101 may transmit or receive a signal via a first antenna (e.g., the first antenna 310 in FIG. 3) and/or a second antenna (e.g., the second antenna 320 in FIG. 3) based on the operation of a first communication circuit (e.g., the first communication circuit 330 in FIG. 3). A filter (e.g., the filter 311 in FIG. 3) may be applied to the first antenna 310 to filter out adjacent frequency band signals of the WWAN. The filter may not be applied to the second antenna 320.

According to an embodiment, in operation 503, the first communication circuit 330 may determine, while operating, whether the second communication circuit 340 is operating.

According to an embodiment, the first communication circuit 330 may determine whether the second communication circuit 340 is operating, based on the received signal quality of the first antenna 310 and/or the second antenna 320.

According to an embodiment, the first communication circuit 330 may determine whether the second communication circuit 340 is operating, if the difference between the received signal strengths (e.g., RSSI) of the first and second antennas 310 and 320 is equal to or exceeds a specified value.

According to an embodiment, the first communication circuit 330 may determine that the second communication circuit 340 is not operating, when the gain loss of the received signal is equal to or exceeds a specified value by transmitting a signal via the second antenna 320 and receiving a signal via the first antenna 310.

According to an embodiment, the first communication circuit 330 may determine that the second communication circuit 340 is operating, when the difference between the received signal strengths of the first and second antennas 310 and 320 is equal to or exceeds a specified value, and when the signal to noise ratio of the antenna with a higher received signal strength (e.g., RSSI) between the first and second antennas 310 and 320 decreases.

According to an embodiment, the first communication circuit 330 can determine that the second communication circuit 340 is operating if the received signal strength (e.g., RSSI or SNR) of the first antenna 310 and the second antenna 320 differ by a specified value or more for a specified period of time or more.

According to an embodiment, the electronic device 101 may include a signal line connected between the first communication circuit 330 and the second communication circuit 340. If this signal line exists, the first communication circuit 330 may determine the operation of the second communication circuit 340 through the signal line connected to the second communication circuit 340.

According to an embodiment, if it is determined that the second communication circuit 340 is operating, the first communication circuit 330 may change and apply the gains of the first and second antennas 310 and 320 in operation 505.

According to an embodiment, if the simultaneous operation of the second communication circuit 340 is determined, the first communication circuit 330 may increase the gain value of the first antenna 310 to which the filter 311 is applied.

According to an embodiment, if it is determined that the second communication circuit 340 is operating, the first communication circuit 330 may increase the gain of the first antenna 310 to a specified value and decrease the gain of the second antenna 320.

According to an embodiment, if it is determined that the second communication circuit 340 is operating, the first communication circuit 330 may change the gain table so as to increase the gain of the first antenna 310 to which the filter is applied and proportionally decrease the gain of the second antenna 320 to which the filter is not applied.

According to an embodiment, if it is determined that the second communication circuit 340 is operating, the first communication circuit 330 may identify the current SAR and, based on the identified SAR, adjust the gains of the first and second antennas 310 and 320 so as not to exceed the SAR limit.

According to an embodiment, the first communication circuit 330 may change the antenna gain table to a predetermined value or dynamically change it within a range that satisfies the SAR standard.

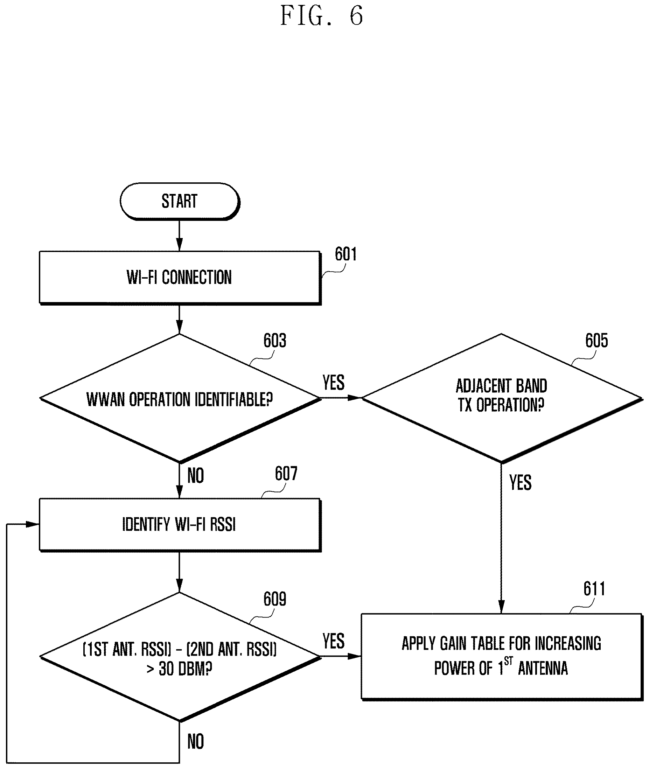

FIG. 6 is a flowchart illustrating an example of the operation of an electronic device according to an embodiment.

According to an embodiment, in operation 601, the electronic device 101 may establish a WiFi connection, for example, by transmitting or receiving a signal through a first antenna (e.g., the first antenna 310 in FIG. 3) and/or a second antenna (e.g., the second antenna 320 in FIG. 3) based on the operation of a first communication circuit (e.g., the first communication circuit 330 in FIG. 3). A filter (e.g., the filter 311 in FIG. 3) may be applied to the first antenna 310 to filter out adjacent frequency band signals of WWAN. The filter may not be applied to the second antenna 320.

According to an embodiment, in operation 603, the first communication circuit 330 may determine whether a signal capable of identifying whether the second communication circuit 340 is performing WWAN communication is received. For example, the electronic device 101 may include a signal line connected between the first communication circuit 330 and the second communication circuit 340. If this signal line exists, the first communication circuit 330 may identify the operation of the second communication circuit 340 through the signal line connected to the second communication circuit 340. Accordingly, if it is identified in operation 605 that the second communication circuit 340 is operating and transmitting a signal, the process proceeds to operation 611, where a changed gain table may be applied to increase the power of the first antenna 310.

According to an embodiment, if the signal capable of identifying whether the second communication circuit 340 is performing WWAN communication is not received, the first communication circuit 330 may identify the signal quality (e.g., RSSI) of WiFi signals received via the first and second antennas 310 and 320 in operation 607.

According to an embodiment, in operation 609, the first communication circuit 330 may determine whether the RSSI of the second antenna 320 exceeds the RSSI of the first antenna 310 by a specified value, for example, a difference of 30 dBm or more, and if so, apply a changed gain table to increase the power of the first antenna 310 in operation 611. In this case, the gain table may be changed to proportionally decrease the power of the second antenna 320. The gain change has been described above and thus a detailed description thereof is omitted here.

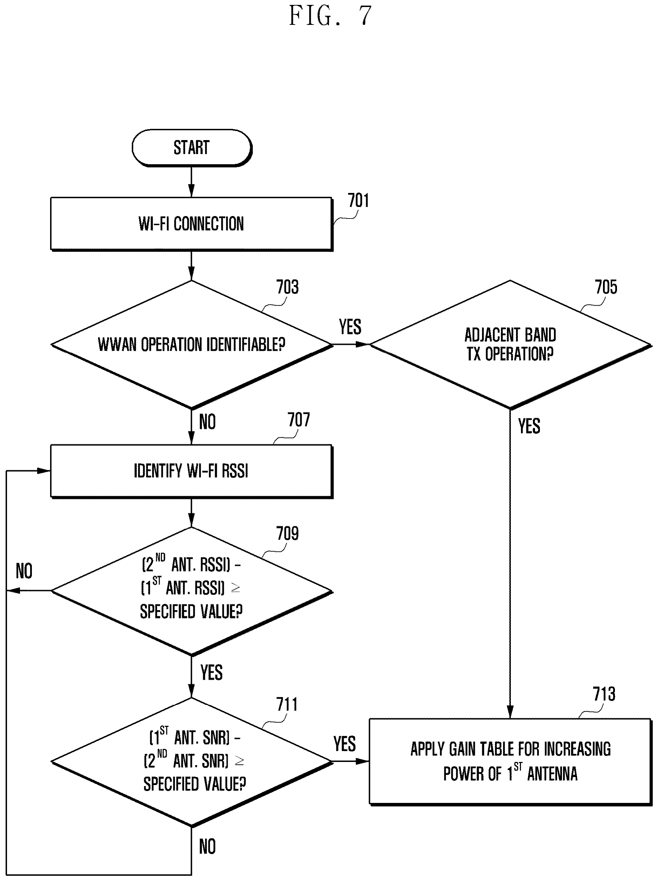

FIG. 7 is a flowchart illustrating an example of the operation of an electronic device according to an embodiment.

According to an embodiment, in operation 701, the electronic device 101 may establish a WiFi connection, for example, by transmitting or receiving a signal through a first antenna (e.g., the first antenna 310 in FIG. 3) and/or a second antenna (e.g., the second antenna 320 in FIG. 3) based on the operation of a first communication circuit (e.g., the first communication circuit 330 in FIG. 3). A filter (e.g., the filter 311 in FIG. 3) may be applied to the first antenna 310 to filter out adjacent frequency band signals of WWAN. The filter may not be applied to the second antenna 320.

According to an embodiment, in operation 703, the first communication circuit 330 may determine whether a signal capable of identifying whether the second communication circuit 340 is performing WWAN communication is received. For example, the electronic device 101 may include a signal line connected between the first communication circuit 330 and the second communication circuit 340. If this signal line exists, the first communication circuit 330 may identify the operation of the second communication circuit 340 through the signal line connected to the second communication circuit 340. Accordingly, if it is identified in operation 705 that the second communication circuit 340 is operating and transmitting a signal, the process proceeds to operation 713, where a changed gain table may be applied to increase the power of the first antenna 310.

According to an embodiment, if the signal capable of identifying whether the second communication circuit 340 is performing WWAN communication is not received, the first communication circuit 330 may identify the signal quality (e.g., RSSI) of WiFi signals received via the first and second antennas 310 and 320 in operation 707.

According to an embodiment, in operation 709, the first communication circuit 330 may determine whether the RSSI of the second antenna 320 exceeds the RSSI of the first antenna 310 by a difference of a specified value or more, and if so, may determine in operation 711 whether the SNR of the first antenna 310 exceeds the SNR of the second antenna 320 by a specified value or more.

According to an embodiment, in operation 713, the first communication circuit may apply a changed gain table to increase the power of the first antenna 310 when the RSSI of the second antenna 320 exceeds the RSSI of the first antenna 310 by a difference of a specified value or more and the SNR of the first antenna 310 exceeds the SNR of the second antenna 320 by a specified value or more. In this case, the gain table may be changed to proportionally decrease the power of the second antenna 320. The gain change has been described above and thus a detailed description thereof is omitted here.

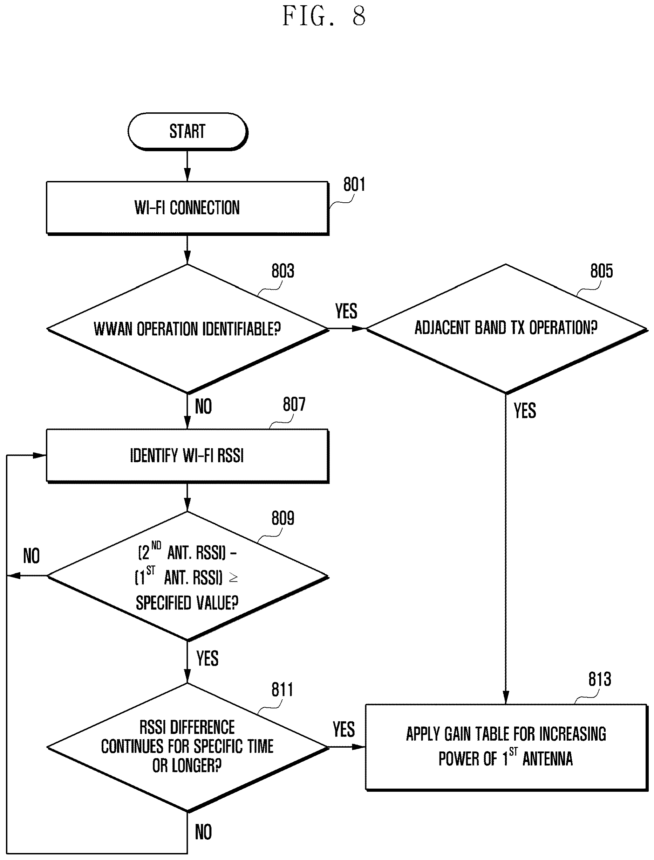

FIG. 8 is a flowchart illustrating an example of the operation of an electronic device according to an embodiment.

According to an embodiment, in operation 801, the electronic device 101 may establish a WiFi connection, for example, by transmitting or receiving a signal through a first antenna (e.g., the first antenna 310 in FIG. 3) and/or a second antenna (e.g., the second antenna 320 in FIG. 3) based on the operation of a first communication circuit (e.g., the first communication circuit 330 in FIG. 3). A filter (e.g., the filter 311 in FIG. 3) may be applied to the first antenna 310 to filter out adjacent frequency band signals of WWAN. The filter may not be applied to the second antenna 320.

According to an embodiment, in operation 803, the first communication circuit 330 may determine whether a signal capable of identifying whether the second communication circuit 340 is performing WWAN communication is received. For example, the electronic device 101 may include a signal line connected between the first communication circuit 330 and the second communication circuit 340. If this signal line exists, the first communication circuit 330 may identify the operation of the second communication circuit 340 through the signal line connected to the second communication circuit 340. Accordingly, if it is identified in operation 805 that the second communication circuit 340 is operating and transmitting a signal, the process proceeds to operation 813, where a changed gain table may be applied to increase the power of the first antenna 310.

According to an embodiment, if the signal capable of identifying whether the second communication circuit 340 is performing WWAN communication is not received, the first communication circuit 330 may identify the signal quality (e.g., RSSI) of WiFi signals received via the first and second antennas 310 and 320 in operation 807.

According to an embodiment, in operation 809, the first communication circuit 330 may determine whether the RSSI of the second antenna 320 exceeds the RSSI of the first antenna 310 by a difference of a specified value or more, and if so, may determine in operation 811 whether the time during which the RSSI of the second antenna 320 exceeds the RSSI of the first antenna 310 by a difference of a specified value or more continues for a specified period of time or longer.

According to an embodiment, in operation 813, the first communication circuit may apply a changed gain table to increase the power of the first antenna 310 when the RSSI of the second antenna 320 exceeds the RSSI of the first antenna 310 by a difference of a specified value or more for a specified period of time or longer. In this case, the gain table may be changed to proportionally decrease the power of the second antenna 320. The gain change has been described above and thus a detailed description thereof is omitted here.

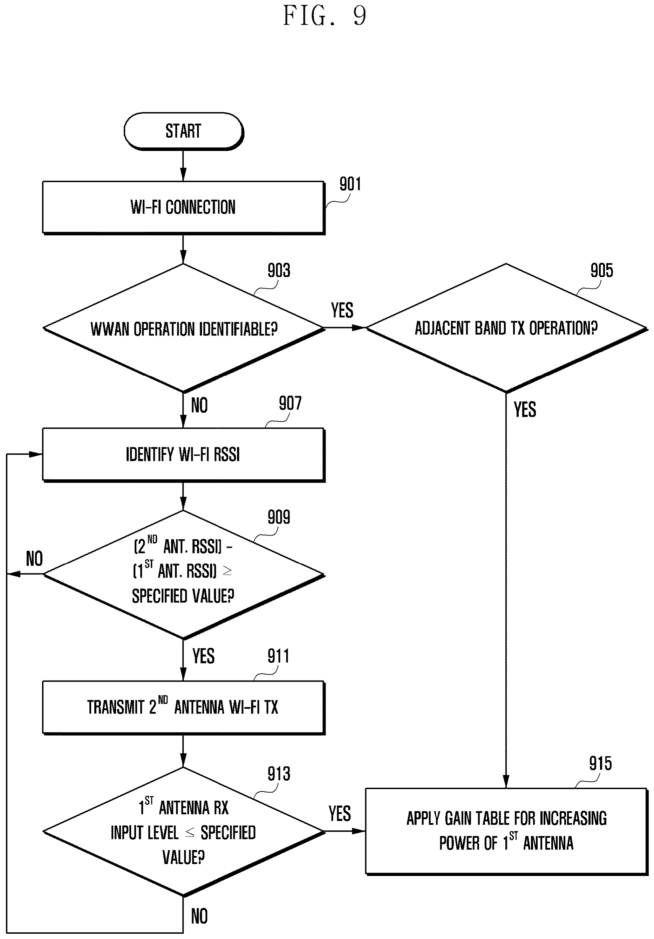

FIG. 9 is a flowchart illustrating an example of the operation of an electronic device according to an embodiment.

According to an embodiment, in operation 901, the electronic device 101 may establish a WiFi connection, for example, by transmitting or receiving a signal through a first antenna (e.g., the first antenna 310 in FIG. 3) and/or a second antenna (e.g., the second antenna 320 in FIG. 3) based on the operation of a first communication circuit (e.g., the first communication circuit 330 in FIG. 3). A filter (e.g., the filter 311 in FIG. 3) may be applied to the first antenna 310 to filter out adjacent frequency band signals of WWAN. The filter may not be applied to the second antenna 320.

According to an embodiment, in operation 903, the first communication circuit 330 may determine whether a signal capable of identifying whether the second communication circuit 340 is performing WWAN communication is received. For example, the electronic device 101 may include a signal line connected between the first communication circuit 330 and the second communication circuit 340. If this signal line exists, the first communication circuit 330 may identify the operation of the second communication circuit 340 through the signal line connected to the second communication circuit 340. Accordingly, if it is identified in operation 905 that the second communication circuit 340 is operating and transmitting a signal, the process proceeds to operation 915, where a changed gain table may be applied to increase the power of the first antenna 310.

According to an embodiment, if the signal capable of identifying whether the second communication circuit 340 is performing WWAN communication is not received, the first communication circuit 330 may identify the signal quality (e.g., RSSI) of WiFi signals received via the first and second antennas 310 and 320 in operation 907.

According to an embodiment, in operation 909, the first communication circuit 330 may determine whether the RSSI of the second antenna 320 exceeds the RSSI of the first antenna 310 by a specified value or more. If so, the first communication circuit 330 may transmit a WiFi transmission signal via the second antenna 320 in operation 911.

According to an embodiment, in operation 913, the first communication circuit may determine whether the input level of a signal received via the first antenna 310 is equal to or below a specified value. If so, the first communication circuit may apply a changed gain table to increase the power of the first antenna 310 in operation 915. In this case, the gain table may be changed to proportionally decrease the power of the second antenna 320. The gain modification has been described above and thus a detailed description thereof is omitted here.

According to an embodiment, an electronic device (e.g., the electronic device 101 in FIG. 1, FIG. 2, or FIG. 3) may include a first antenna (e.g., the first antenna 310 in FIG. 3), a filter (e.g., the filter 311 in FIG. 3) configured to filter a noise component in an adjacent frequency band of a signal received via the first antenna, a second antenna (e.g., the second antenna 320 in FIG. 3), a first communication circuit (e.g., the first communication circuit 330 in FIG. 3) configured to transmit and/or receive a signal in a first frequency band of a first communication network via at least one of a plurality of antennas including the first antenna and the second antenna, and a second communication circuit (e.g., the second communication circuit 340 in FIG. 3) configured to transmit and/or receive a signal in a second frequency band of a second communication network via the first antenna or the second antenna. The filter may be configured to reduce a noise component introduced into the first communication circuit based on a transmission operation of the second communication circuit.

According to an embodiment, the electronic device may further include a diplexer (e.g., the diplexer 315 and/or 325 in FIG. 3) configured to selectively route one of a transmission signal from the first communication circuit or a transmission signal from the second communication circuit to the first antenna or the second antenna, and selectively route a signal received from the first antenna or the second antenna to the first communication circuit or the second communication circuit.

According to an embodiment, a noise component of an adjacent frequency band may not be filtered out for the signal received via the second antenna and be routed to the first communication circuit, and the first antenna may have a characteristic of having lower reception performance or being vulnerable to noise interference of an adjacent frequency band compared to the second antenna.

According to an embodiment, the first communication circuit may be configured to determine whether the second communication circuit is operating while the first communication circuit transmits and/or receives a signal via at least one of the first antenna or the second antenna, and then change and apply gains of the first antenna and the second antenna in response to determining that the second communication circuit is operating.

According to an embodiment, the first communication circuit may be configured to determine whether the second communication circuit is operating based on received signal quality of the first antenna and the second antenna.

According to an embodiment, the first communication circuit may be configured to determine that the second communication circuit is operating when a difference between received signal strengths of the first antenna and the second antenna is equal to or exceeds a specified value.

According to an embodiment, the first communication circuit may be configured to transmit a signal via the second antenna, receive a signal via the first antenna, and determine that the second communication circuit is not operating when a gain loss of the received signal is equal to or exceeds a specified value.

According to an embodiment, the first communication circuit may be configured to determine that the second communication circuit is operating when a difference between received signal strengths of the first antenna and the second antenna is equal to or exceeds a specified value and when a signal-to-noise ratio (SNR) of an antenna having a higher received signal strength decreases.

According to an embodiment, the first communication circuit may be configured to determine that the second communication circuit is operating when a difference between received signal strengths of the first antenna and the second antenna is equal to or exceeds a specified value for a specified period of time or longer.

According to an embodiment, the first communication circuit may be configured to determine whether the second communication circuit is operating via a signal line connected to the second communication circuit.

According to an embodiment, the first communication circuit may be configured to, in response to determining that the second communication circuit is operating, increase a gain of the first antenna to a specified value and decrease a gain of the second antenna.

According to an embodiment, the gain of the second antenna may be decreased in proportion to the gain of the first antenna.

According to an embodiment, the first communication circuit may be configured to, in response to determining that the second communication circuit is operating, identify a specific absorption rate (SAR), and adjust gains of the first antenna and the second antenna based on the identified SAR.

An electronic device according to various embodiments of the disclosure may be one of various types of electronic devices. For example, the electronic device may include a portable communication device (e.g., a smartphone), a computer device, a portable multimedia device, a portable medical device, a camera, a wearable device, or a home appliance. However, the electronic device according to embodiments of the disclosure is not limited to any of those described above.

Various embodiments of the disclosure and the terms used herein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B", "at least one of A and B", "at least one of A or B", "A, B, or C", "at least one of A, B, and C", and "at least one of A, B, or C" may include any one of, or all possible combinations of the items enumerated together in a corresponding one of the phrases. As used herein, such terms as "1st" and "2nd", or "first" and "second" may be used to simply distinguish a corresponding component from another, and does not limit the components in other aspect (e.g., importance or order). If a certain element (e.g., a first element) is referred to, with or without the term "operatively" or "communicatively," as "coupled" or "connected" to another element (e.g., a second element), the element may be connected to the other element directly (e.g., wiredly), wirelessly, or via a third element.

The term "module" used in various embodiments of the disclosure may include a unit implemented in hardware, software, or firmware, or any combination thereof, and may interchangeably be used with other terms, for example, logic, logic block, component, or circuitry. A module may be a single integral component, or a minimum unit or part thereof, adapted to perform one or more functions. For example, according to an embodiment, the module may be implemented in a form of an application-specific integrated circuit (ASIC).

Various embodiments of the disclosure may be implemented as software (e.g., the program 140) including one or more instructions that are stored in a storage medium (e.g., the internal memory 136 or the external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

A method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore™), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, the integrated component may perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The embodiments disclosed in this document are merely examples presented to facilitate easy explanation and understanding of the technical content, and are not intended to limit the scope of the technology disclosed in this document. Therefore, the scope of the technology disclosed in this document should be interpreted to include all modifications or variations derived based on the technical concepts of the various embodiments disclosed in this document, in addition to the embodiments disclosed herein.

**Claims**

1.  An electronic device comprising:

    a first antenna (310);
    a filter (311) configured to filter a noise component in an adjacent frequency band of a signal received via the first antenna (310);
    a second antenna (320);
    a first communication circuit (330) configured to transmit and/or receive a signal in a first frequency band of a first communication network via at least one of a plurality of antennas including the first antenna (310) and the second antenna (320); and
    a second communication circuit (340) configured to transmit and/or receive a signal in a second frequency band of a second communication network via the first antenna (310) or the second antenna (320),
    wherein the second frequency band is adjacent to the first frequency band, and the filter (311) is configured to reduce a noise component introduced into the first communication circuit based on a transmission operation of the second communication circuit.

2.  The electronic device of claim 1, further comprising:
    a diplexer (315 and/or 325) configured to selectively route one of a transmission signal from the first communication circuit (330) or a transmission signal from the second communication circuit (340) to the first antenna (310) or the second antenna (320), and selectively route a signal received from the first antenna (310) or the second antenna (320) to the first communication circuit (330) or the second communication circuit (340).

3.  The electronic device of claim 1, wherein the first communication circuit (330) is configured to:

    determine whether the second communication circuit (340) is operating while the first communication circuit (330) transmits and/or receives a signal via at least one of the first antenna (310) or the second antenna (320), and
    change and apply gains of the first antenna (310) and the second antenna (320) in response to determining that the second communication circuit (340) is operating.

4.  The electronic device of claim 3, wherein the first communication circuit (330) is configured to determine whether the second communication circuit (340) is operating based on received signal quality of the first antenna (310) and the second antenna (320).

5.  The electronic device of claim 3, wherein the first communication circuit (330) is configured to determine that the second communication circuit (340) is operating when a difference between received signal strengths of the first antenna (310) and the second antenna (320) is equal to or exceeds a specified value.

6.  The electronic device of claim 5, wherein the first communication circuit (330) is configured to transmit a signal via the second antenna (320), receive a signal via the first antenna (310), and determine that the second communication circuit (340) is not operating when a gain loss of the received signal is equal to or exceeds a specified value.

7. The electronic device of claim 3, wherein the first communication circuit (330) is configured to determine that the second communication circuit (340) is operating when a difference between received signal strengths of the first antenna (310) and the second antenna (320) is equal to or exceeds a specified value and when a signal-to-noise ratio (SNR) of an antenna having a higher received signal strength decreases.

8. The electronic device of claim 3, wherein the first communication circuit (330) is configured to determine that the second communication circuit (340) is operating when a difference between received signal strengths of the first antenna (310) and the second antenna (320) is equal to or exceeds a specified value for a specified period of time or longer.

9. The electronic device of claim 3, wherein the first communication circuit (330) is configured to determine whether the second communication circuit (340) is operating via a signal line connected to the second communication circuit (340).

10. The electronic device of claim 3, wherein the first communication circuit (330) is configured to, in response to determining that the second communication circuit (340) is operating, increase a gain of the first antenna (310) to a specified value and decrease a gain of the second antenna (320).

11. The electronic device of claim 10, wherein the gain of the second antenna (320) is decreased in proportion to the gain of the first antenna (310).

12. The electronic device of claim 3, wherein the first communication circuit (330) is configured to, in response to determining that the second communication circuit (340) is operating, identify a specific absorption rate (SAR), and adjust gains of the first antenna (310) and the second antenna (320) based on the identified SAR.

13. A method of an electronic device comprising: a first antenna (310), a filter (311) configured to filter a noise component in an adjacent frequency band of a signal received via the first antenna (310), a second antenna (320), a first communication circuit (330) configured to transmit and/or receive a signal in a first frequency band of a first communication network via at least one of a plurality of antennas including the first antenna (310) and the second antenna (320), and a second communication circuit (340) configured to transmit and/or receive a signal in a second frequency band of a second communication network via the first antenna (310) or the second antenna (320), the method comprising:

   determining whether the second communication circuit (340) is operating while the first communication circuit (330) transmits or receives a signal via at least one of the first antenna (310) or the second antenna (320); and
   in response to determining that the second communication circuit (340) is operating, changing and applying gains of the first antenna (310) and the second antenna (320).

14. The method of claim 13, wherein determining whether the second communication circuit (340) is operating includes determining whether the second communication circuit (340) is operating based on received signal quality of the first antenna (310) and the second antenna (320).

15. The method of claim 13, wherein determining whether the second communication circuit (340) is operating includes determining that the second communication circuit (340) is operating when a difference between received signal strengths of the first antenna (310) and the second antenna (320) is equal to or exceeds a specified value.

# FIG. 1

ELECTRONIC DEVICE 101

INPUT MODULE 150

SOUND OUTPUT MODULE 155

DISPLAY MODULE 160

BATTERY 189

POWER MANAGEMENT MODULE 188

PROCESSOR 120
MAIN PROCESSOR 121
AUXILIARY PROCESSOR 123

MEMORY 130
VOLATILE MEMORY 132
NON-VOLATILE MEMORY 134
INTERNAL MEMORY 136
EXTERNAL MEMORY 138

COMMUNICATION MODULE 190
WIRELESS COMMUNICATION MODULE 192
WIRED COMMUNICATION MODULE 194

SUBSCRIBER IDENTIFICATION MODULE 196

ANTENNA MODULE 197

AUDIO MODULE 170

SENSOR MODULE 176

HAPTIC MODULE 179

CAMERA MODULE 180

INTERFACE 177

CONNECTION TERMINAL 178

PROGRAM 140
APPLICATIONS 146
MIDDLEWARE 144
OPERATING SYSTEM 142

100

SECOND NETWORK 199

ELECTRONIC DEVICE 104

FIRST NETWORK 198

ELECTRONIC DEVICE 102

SERVER 108

EP 4 734 381 A1

FIG. 2

# FIG. 3A

# FIG. 3B

EP 4 734 381 A1

FIG. 4

# FIG. 5

```
              ┌─────────────┐
              │    START    │
              └──────┬──────┘
                     │
                     ▼
    ┌────────────────────────────────────┐  501
    │  1ST COMMUNICATION CIRCUIT OPERATES │
    │     VIA 1ST OR 2ND ANTENNA          │
    └────────────────┬───────────────────┘
                     │
                     ▼
              ◇─────────────◇  503
         2ND COMMUNICATION CIRCUIT OPERATES?  ──── NO ──┐
              ◇─────────────◇                           │
                     │ YES                              │
                     ▼                                  │
    ┌────────────────────────────────────┐  505         │
    │          CHANGE GAINS OF           │              │
    │      1ST AND 2ND ANTENNAS          │              │
    └────────────────┬───────────────────┘             │
                     │                                  │
                     ▼                                  │
              ┌─────────────┐                           │
              │     END     │                           │
              └─────────────┘                           │
```

# FIG. 6

```
                    ┌─────────────┐
                    │    START    │
                    └──────┬──────┘
                           │
                           ▼
              ┌────────────────────────┐   601
              │     WI-FI CONNECTION    │
              └────────────┬───────────┘
                           │
                           ▼
            603                                    605
      ╱─────────────────╲        YES      ╱─────────────────╲
     ╱ WWAN OPERATION    ╲───────────────╱   ADJACENT BAND    ╲
     ╲ IDENTIFIABLE?     ╱               ╲   TX OPERATION?     ╱
      ╲─────────────────╱                 ╲─────────────────╱
              │ NO    607                          │ YES
              ▼                                     │
      ┌──────────────────┐                          │
      │ IDENTIFY WI-FI RSSI│                         │
      └────────┬─────────┘                          │
               │                                     │
               ▼          609                        ▼          611
      ╱─────────────────╲        YES      ┌────────────────────────────┐
     ╱ (1ST ANT. RSSI) - ╲───────────────│ APPLY GAIN TABLE FOR INCREASING│
     ╲ (2ND ANT. RSSI)   ╱               │ POWER OF 1ST ANTENNA        │
      ╲ > 30 DBM?       ╱                └────────────────────────────┘
       ╲───────────────╱
              │ NO
```

$(1ST\ ANT.\ RSSI) - (2ND\ ANT.\ RSSI) > 30\ DBM?$

APPLY GAIN TABLE FOR INCREASING POWER OF $1^{ST}$ ANTENNA

# FIG. 7

START

WI-FI CONNECTION — 701

WWAN OPERATION IDENTIFIABLE? — 703

YES → ADJACENT BAND TX OPERATION? — 705

NO

IDENTIFY WI-FI RSSI — 707

$(2^{ND}$ ANT. RSSI) − $(1^{ST}$ ANT. RSSI) $\geq$ SPECIFIED VALUE? — 709

NO

YES

$(1^{ST}$ ANT. SNR) − $(2^{ND}$ ANT. SNR) $\geq$ SPECIFIED VALUE? — 711

YES

NO

YES (from 705)

APPLY GAIN TABLE FOR INCREASING POWER OF $1^{ST}$ ANTENNA — 713

# FIG. 8

START

WI-FI CONNECTION  801

WWAN OPERATION IDENTIFIABLE?  803

ADJACENT BAND TX OPERATION?  805

YES

NO

IDENTIFY WI-FI RSSI  807

$(2^{ND}$ ANT. RSSI) $-$ $(1^{ST}$ ANT. RSSI) $\geq$ SPECIFIED VALUE?  809

NO

YES

YES

RSSI DIFFERENCE CONTINUES FOR SPECIFIC TIME OR LONGER?  811

YES

APPLY GAIN TABLE FOR INCREASING POWER OF $1^{ST}$ ANTENNA  813

NO

# FIG. 9

```
                    ┌─────────────┐
                    │    START    │
                    └──────┬──────┘
                           │
                           ▼
              ┌────────────────────────┐  901
              │    WI-FI CONNECTION     │
              └───────────┬────────────┘
                          │
                          ▼
          ╱───────────────────────────╲  903          ╱──────────────────────────╲  905
         ╱                             ╲      YES     ╱                            ╲
        ╱  WWAN OPERATION IDENTIFIABLE? ╲───────────▶╲  ADJACENT BAND TX OPERATION? ╱
         ╲                             ╱              ╲                            ╱
          ╲───────────────────────────╱                ╲──────────────────────────╱
                      │ NO                                        │ YES
                      ▼          907                              │
              ┌────────────────────────┐                         │
        ┌────▶│     IDENTIFY WI-FI RSSI │                         │
        │     └───────────┬────────────┘                         │
        │                 │                                      │
        │                 ▼          909                         │
        │     ╱───────────────────────╲                          │
        │    ╱  (2^ND ANT. RSSI) –      ╲    NO                   │
        │   ╱   (1^ST ANT. RSSI) ≥       ╲──────┐                 │
        │    ╲   SPECIFIED VALUE?        ╱      │                 │
        │     ╲───────────┬─────────────╱       │                │
        │                 │ YES    911          │                │
        │                 ▼                     │                │
        │     ┌────────────────────────┐        │                │
        │     │ TRANSMIT 2^ND ANTENNA WI-FI TX│   │                │
        │     └───────────┬────────────┘        │                │
        │                 │          913        │                │
        │     ╱───────────────────────╲   YES   │     ┌──────────────────────────────┐  915
        │    ╱   1^ST ANTENNA RX        ╲────────┼────▶│ APPLY GAIN TABLE FOR INCREASING│
        │   ╱  INPUT LEVEL ≤ SPECIFIED   ╲       │     │    POWER OF 1^ST ANTENNA       │
        │    ╲      VALUE?               ╱        │     └──────────────────────────────┘
        │     ╲───────────┬─────────────╱        │
        │                 │ NO                   │
        └─────────────────┴──────────────────────┘
```

## INTERNATIONAL SEARCH REPORT

| International application No. |
| --- |
| **PCT/KR2024/010474** |

| A. | CLASSIFICATION OF SUBJECT MATTER |
| --- | --- |

**H04B 1/401**(2015.01)i; **H04B 1/525**(2015.01)i; **H04B 1/10**(2006.01)i; **H04B 1/3827**(2015.01)i; **H04B 17/12**(2015.01)i; **H04B 17/309**(2015.01)i; **H04W 84/12**(2009.01)i

According to International Patent Classification (IPC) or to both national classification and IPC

| B. | FIELDS SEARCHED |
| --- | --- |

Minimum documentation searched (classification system followed by classification symbols)

H04B 1/401(2015.01); H04B 17/336(2015.01); H04B 7/0456(2017.01); H04B 7/06(2006.01); H04W 24/10(2009.01); H04W 28/04(2009.01); H04W 76/15(2018.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 안테나(antenna), 복수(plurality), 인접(adjacent), 주파수(frequency), 노이즈 (noise), 필터(filter), 저감(reduction)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | KR 10-2022-0003665 A (FRAUNHOFER-GESELLSCHAFT ZUR FOERDERUNG DER ANGEWANDTEN FORSCHUNG E.V.) 10 January 2022 (2022-01-10)<br>See paragraph [0014]; and claim 1. | 1-15 |
| Y | US 2022-0231737 A1 (TELEFONAKTIEBOLAGET LM ERICSSON (PUBL)) 21 July 2022 (2022-07-21)<br>See claims 4 and 14. | 1-15 |
| A | US 2017-0324462 A1 (ZTE CANADA INC.) 09 November 2017 (2017-11-09)<br>See paragraphs [0036]-[0084]; and figures 1-8. | 1-15 |
| A | US 2018-0352461 A1 (QUALCOMM INCORPORATED) 06 December 2018 (2018-12-06)<br>See paragraphs [0032]-[0080]; and figures 1-10B. | 1-15 |
| A | US 2022-0247471 A1 (NXP B.V.) 04 August 2022 (2022-08-04)<br>See paragraphs [0066]-[0214]; and figures 1-14. | 1-15 |

☐ Further documents are listed in the continuation of Box C.    ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **23 October 2024** | **23 October 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT
### Information on patent family members

International application No.

**PCT/KR2024/010474**

| Patent document cited in search report | | | Publication date (day/month/year) | Patent family member(s) | | | Publication date (day/month/year) |
|---|---|---|---|---|---|---|---|
| KR | 10-2022-0003665 | A | 10 January 2022 | CN | 111316732 | A | 19 June 2020 |
| | | | | CN | 111316732 | B | 20 October 2023 |
| | | | | EP | 3679754 | A1 | 15 July 2020 |
| | | | | EP | 3679754 | B1 | 03 January 2024 |
| | | | | EP | 4333553 | A2 | 06 March 2024 |
| | | | | EP | 4333553 | A3 | 05 June 2024 |
| | | | | ES | 2973418 | T3 | 20 June 2024 |
| | | | | JP | 2020-532919 | A | 12 November 2020 |
| | | | | JP | 2023-106368 | A | 01 August 2023 |
| | | | | JP | 7280247 | B2 | 23 May 2023 |
| | | | | KR | 10-2020-0044946 | A | 29 April 2020 |
| | | | | KR | 10-2347361 | B1 | 04 January 2022 |
| | | | | US | 11160138 | B2 | 26 October 2021 |
| | | | | US | 11596025 | B2 | 28 February 2023 |
| | | | | US | 12108495 | B2 | 01 October 2024 |
| | | | | US | 2020-0205230 | A1 | 25 June 2020 |
| | | | | US | 2022-0039204 | A1 | 03 February 2022 |
| | | | | US | 2023-0309192 | A1 | 28 September 2023 |
| | | | | US | 2024-0015851 | A1 | 11 January 2024 |
| | | | | WO | 2019-048384 | A1 | 14 March 2019 |
| US | 2022-0231737 | A1 | 21 July 2022 | EP | 3981090 | A1 | 13 April 2022 |
| | | | | EP | 3981090 | B1 | 27 September 2023 |
| | | | | US | 12003288 | B2 | 04 June 2024 |
| | | | | WO | 2020-244783 | A1 | 10 December 2020 |
| US | 2017-0324462 | A1 | 09 November 2017 | WO | 2016-082040 | A1 | 02 June 2016 |
| US | 2018-0352461 | A1 | 06 December 2018 | CN | 110741682 | A | 31 January 2020 |
| | | | | CN | 110741682 | B | 07 December 2021 |
| | | | | EP | 3636007 | A1 | 15 April 2020 |
| | | | | EP | 3636007 | B1 | 23 June 2021 |
| | | | | US | 10743203 | B2 | 11 August 2020 |
| | | | | WO | 2018-226312 | A1 | 13 December 2018 |
| US | 2022-0247471 | A1 | 04 August 2022 | EP | 4040689 | A1 | 10 August 2022 |
| | | | | US | 11722197 | B2 | 08 August 2023 |

Form PCT/ISA/210 (patent family annex) (July 2022)